# EUROPÄISCHE PATENTANMELDUNG

(11) **EP 4 723 055 A1**
(43) Veröffentlichungstag der Anmeldung: **08.04.2026**
(21) Anmeldenummer: 25203458.2
(22) Anmeldetag: 19.09.2025
(51) Int. Cl.: G06V 10/98, G06V 10/94

(54) **VERFAHREN UND VORRICHTUNG ZUM ANPASSEN EINES SYSTEMS ZUR OBJEKTDETEKTION**

(30) Priorität: 01.10.2024 DE 102024209608
(71) Anmelder: Siemens Aktiengesellschaft, 80333 München (DE)
(72) Erfinder: Kaukewitsch, Christof, 81739 München (DE); Rothbauer, Stefan, 80997 München (DE); Schönhaar, Hannes, 80997 München (DE)
(74) Vertreter: Siemens Patent Attorneys

(57) **Zusammenfassung**

Die Erfindung betrifft ein Verfahren zum Anpassen eines Systems (S) zur Objektdetektion, wobei das System (S) eine Systemarchitektur aufweist, die aus Software- und Hardwarekomponenten (DK, KI) besteht, wobei zumindest eine der Softwarekomponenten eine Kl-basierte Detektionskomponente (KI) ist. Das Verfahren weist die folgenden Schritte auf:
a) Untersuchen (S2) der Systemarchitektur und Bestimmen der durch die Systemarchitektur maximal erreichbaren Robustheit,
b) Bewerten (S3), ob die bestimmte Robustheit einen vordefinierten Schwellenwert erfüllt, und
c) Anpassen (S4) der Systemarchitektur, wenn die bestimmte Robustheit den vordefinierten Schwellenwert nicht erfüllt.

Die Erfindung betrifft des Weiteren eine entsprechende Vorrichtung (V) zum Anpassen eines Systems (S) zur Objektdetektion.

## Beschreibung

Die vorliegende Erfindung betrifft ein Verfahren zum Anpassen eines Systems zur Objektdetektion. Darüber hinaus betrifft die vorliegende Erfindung eine Vorrichtung zum Anpassen eines Systems zur Objektdetektion. Des Weiteren betrifft die vorliegende Erfindung ein Computerprogrammprodukt, welches auf einer programmgesteuerten Einrichtung die Durchführung des Verfahrens zum Anpassen eines Systems zur Objektdetektion veranlasst.

Systeme zur Objektdetektion werden immer häufiger im Mobilitätsbereich eingesetzt. Solche Systeme sind im Bereich der funktionalen Sicherheit nur eingeschränkt einsetzbar: Die IEC61508-3:2010, Tabelle A.2 "Softwareentwurf und Softwareentwicklung - Entwurf der Softwarearchitektur" führt auf, dass "künstliche Intelligenz" für die Sicherheitsintegritätslevel 2, 3 und 4 "ausdrücklich nicht empfohlen" wird. Komplexe Objektdetektionssysteme wurden daher bisher nur eingeschränkt im Bereich der funktionalen Sicherheit genutzt.

Bei nicht sicherheitsrelevanten Anwendungen wird bei der Nutzung von künstlicher Intelligenz im Rahmen der Objektdetektionsfunktionalität die Eignung eines Systems, das künstliche Intelligenz einsetzt, zunächst erprobt. Dann wird versucht, über geeignete Validierungsdatensätze die angestrebte Eigenschaft des Systems hinreichend nachzuweisen. Problematisch ist, dass ausreichend umfangreiche Datensätze, insbesondere bezüglich der relevanten Robustheitseigenschaften schwer oder nur mit hohem Aufwand zu erhalten sind. Es muss also ein hoher Aufwand investiert werden, um gegebenenfalls dann festzustellen, dass das System die gesteckten Robustheitsziele nicht erreicht. Des Weiteren gibt ein solches Ergebnis nicht an, ob mit dem gewählten Systemdesign bei besserem Training oder erweiterten Datensätzen die Ziele erreichbar wären.

Unabhängig vom grammatikalischen Geschlecht eines bestimmten Begriffes sind Personen mit männlicher, weiblicher oder anderer Geschlechteridentität mit umfasst.

Vor diesem Hintergrund besteht eine Aufgabe der vorliegenden Erfindung darin, eine Möglichkeit bereitzustellen, ein System mit zumindest einer auf künstlicher Intelligenz basierenden Komponente zu verwenden, und sicherzustellen, dass das System eine bestimmte Robustheit erfüllt.

Demgemäß wird ein Verfahren zum Anpassen eines Systems zur Objektdetektion vorgeschlagen. Das System weist eine Systemarchitektur auf, die aus Software- und Hardwarekomponenten besteht, wobei zumindest eine der Softwarekomponenten eine Kl-basierte Detektionskomponente ist. Bei dem System kann es sich beispielsweise um ein System im mobilen Bereich (Eisenbahn, Automobilbereich, etc.) handeln, bei dem im Umgebungsbereich des entsprechenden Fahrzeugs eine Objektdetektion durchgeführt wird. Dies kann beispielsweise eine Detektion von Objekten auf der Fahrstrecke sein oder, insbesondere im Eisenbahnbereich, eine Detektion von Objekten auf den Gleisen bzw. im Bereich der Türen. Das System kann auch ein allgemeines Überwachungssystem sein, z.B. im Rahmen der Industrieautomatisierung (hier können beispielsweise Objekte wie Gegenstände oder Personen detektiert werden, die sich im Bereich der Bewegungswege von Robotern befinden etc.). Allgemein kann das System zu Objektdetektion insbesondere in sicherheitskritischen Bereichen eingesetzt werden.

Da die Objektdetektion insgesamt komplexer wird, beispielweise durch Einsatz komplexerer Detektionsvorgänge wie Sensorfusion oder durch Automatisierung, weist das System zur Objektdetektion eine Kombination aus Hardware- und Softwarekomponenten auf. Bei den Hardwarekomponenten kann es sich beispielsweise um Detektoren (z.B. Helligkeitssensoren, Temperatursensoren, Laser, oder ähnliches) handeln. Diese werden in Kombination mit Softwarekomponenten eingesetzt, die beispielsweise die Ausgaben der Hardwarekomponenten verarbeiten können. Bei zumindest einer der Softwarekomponenten kann es sich um eine KI-basierte Detektionskomponente handeln. Die KI-basierte Softwarekomponente kann ein maschinelles Lernmodell oder einen maschinellen Lernalgorithmus umfassen. Insbesondere kann die KI-basierte Softwarekomponente dazu verwendet werden, die Ausgabe einer oder mehrerer Hardwarekomponenten als Eingaben zu empfangen und diese zu verwenden, um eine Vorhersage über eine Objektdetektion oder ein Ergebnis einer Objektdetektion auszugeben.

Wie bereits oben erläutert, ist es gerade bei sicherheitskritischen Systemen erforderlich, sicherzustellen, dass mit dem System die notwendigen quantitativen Sicherheitsziele erreicht werden können. Insbesondere gilt dies bezüglich der Robustheit von Kl-basierten Detektoren, beispielsweise in mehrkanaligen Systemen, d.h. Systemen mit mehr als einem Detektor und einem Detektionspfad. Unter Robustheit ist hier die Fähigkeit eines maschinellen Lernmodells, bzw. der entsprechenden Kl-basierten Detektionskomponente, zu verstehen, korrekte Vorhersagen oder Ergebnisse zu liefern, selbst wenn die Eingabedaten leichten Veränderungen oder Störungen unterworfen sind.

Um die Erfüllung quantitativer Sicherheitsziele sicherzustellen, weist das hier vorgeschlagene Verfahren die folgenden Schritte auf:
a) Untersuchen der Systemarchitektur und Bestimmen der durch die Systemarchitektur maximal erreichbaren Robustheit,
b) Bewerten, ob die bestimmte Robustheit einen vordefinierten Schwellenwert erfüllt, und
c) Anpassen der Systemarchitektur, wenn die bestimmte Robustheit den vordefinierten Schwellenwert nicht erfüllt.

Durch das Verfahren wird das System mit (Objekt-)Detektionsfunktion auf seine Robustheit hin untersucht. Die Robustheit bezieht sich dabei immer auf eine Funktion, die von dem System zur Verfügung gestellt wird und die durch die Systemarchitektur maßgeblich beeinflusst bzw. definiert wird.

Beim Untersuchen der Systemarchitektur können sowohl einzelne oder auch mehrere Detektionspfade als auch die gesamten Detektionsfunktion des Systems untersucht werden. Wurde die durch die aktuelle Systemarchitektur maximal erreichbare Robustheit bestimmt, wird im nächsten Schritt bewertet, ob diese maximal erreichbare Robustheit einen vordefinierten Schwellenwert erfüllt. Dieser vordefinierte Schwellenwert kann insbesondere einen Wert der Robustheit darstellen, der für eine Inbetriebnahme des Systems erforderlich ist und der beispielsweise einem Sicherheitsziel des Systems entspricht.

Basierend auf dem Erreichen oder Nicht-Erreichen des Schwellenwerts kann das Verfahren anschließend die Systemarchitektur anpassen oder entscheiden, dass keine Anpassung erforderlich ist. Erfüllt die Robustheit bereits den vordefinierten Schwellenwert, kann das Verfahren im Schritt c) entscheiden, dass keine Anpassung vorgenommen werden muss und das System mit der derzeitigen Systemarchitektur für den Betrieb freigeben. Dieser Schritt des Anpassens ist vorzugsweise so ausgestaltet, dass hierbei die Systemarchitektur in Richtung der zu erreichenden Robustheit hin angepasst wird. Das bedeutet, dass die Anpassung der Systemarchitektur zielgerichtet so erfolgt, dass die Robustheit den vordefinierten Schwellenwert erreicht. Wie weiter unten noch näher beschrieben wird, ist es auch möglich, eine Anpassung der Systemarchitektur vorzunehmen, wenn die zu erreichende Robustheit sogar übererfüllt wird. Dies kann dazu dienen, Kosten einzusparen, z.B. indem ein redundanter Pfad eingespart wird.

Insbesondere ist es durch das Verfahren möglich, eine geplante Systemarchitektur bzw. Systemdesign vorab, d.h. vor der Inbetriebnahme, zu untersuchen. Auf diese Weise ist eine frühzeitige Bewertung dahingehend möglich, ob ein gewähltes Systemdesign prinzipiell in der Lage ist, die Robustheitsanforderungen an das System zu erreichen. Können die Ziele, d.h. der vordefinierte Schwellenwert für die Robustheit, nicht erreicht werden, kann die Systemarchitektur im letzten Schritt angepasst werden, mit dem Ziel, die erforderliche Robustheit zu erreichen. In diesem Schritt kann also ermittelt werden, dass mit einer angepassten Systemarchitektur die Robustheitsziele erreichbar sind. Das Verfahren kann auch bei Inbetriebnahme des Systems durchgeführt werden, um beispielsweise vor der tatsächlichen Inbetriebnahme noch einmal sicherzustellen, dass das System die erforderliche Robustheit hat. Des Weiteren kann das Verfahren zu beliebigen Zeitpunkten während des Betriebs wiederholt werden.

Gemäß einer Ausführung weist das Verfahren das Wiederholen der Schritte a) bis c) auf, bis der vordefinierte Schwellenwert erreicht ist. Die Schritte können somit so oft wie nötig durchgeführt werden, bis ein Optimum aller Ziele erreicht ist, insbesondere bis der vordefinierte Schwellenwert erreicht wird.

Gemäß einer weiteren Ausführungsform weist das Verfahren ein Detektieren einer Änderung der Systemarchitektur des Systems und ein Wiederholen der Schritte a) bis c) bei einer detektierten Änderung der Systemarchitektur des Systems auf. Auf diese Weise kann das Verfahren auch im laufenden Betrieb eines Systems bei einer Änderung der Systemarchitektur prüfen, ob die Robustheit des Systems mit der geänderten Systemarchitektur nach wie vor den vordefinierten Schwellenwert erfüllt.

Gemäß einer weiteren Ausführungsform weist das Verfahren ein Festlegen der Systemarchitektur vor Schritt a) auf. In einem Vorab-Schritt wird hier vor dem Bestimmen der maximal erreichbaren Robustheit zunächst die Systemarchitektur festgelegt. Dies kann beispielsweise unter Zuhilfenahme von Standardlösungen erfolgen. Mit dem Festlegen der Systemarchitektur kann auch das aus der Systemarchitektur resultierende Fehlermodell (z.B. FTA) festgelegt werden, das zum Bestimmen der maximal erreichbaren Robustheit verwendet werden kann. Falls die Systemarchitektur mehrere Pfade aufweist, wird davon ausgegangen, dass die Abhängigkeiten bzw. Unabhängigkeiten der verschiedenen Detektoren/Detektionspfade und deren Zusammenwirken bekannt, ermittelbar bzw. abschätzbar sind.

Mit dem Festlegen der Systemarchitektur kann des Weiteren auch der vordefinierte Schwellenwert festgelegt werden. Dieser kann unter anderem von dem geplanten Einsatzzweck des Systems abhängen.

Gemäß einer weiteren Ausführungsform umfasst das Bestimmen der maximal erreichbaren Robustheit eine empirische Bewertung der Funktionalität des Systems. Eine solche empirische Bewertung kann beispielsweise die Extrapolation unter Zuhilfenahme empirischer Untersuchungen umfassen. Durch die Untersuchung von Störungen und die Beobachtung der Reaktion des Systems kann die Robustheit der zugrundeliegenden Systemarchitektur empirisch bewertet werden. Eine Annäherung an den vordefinierten Schwellenwert ist z.B. durch die Identifikation von Mustern oder Prinzipien bezüglich der Störungen und der damit zusammenhängenden Reaktion möglich.

Gemäß einer weiteren Ausführungsform umfasst das Bestimmen der Robustheit ein Bestimmen quantitativer Werte der Funktionalität des Systems und Bewerten der bestimmten quantitativen Werten. Quantitative Werte für maximal erreichbare Robustheit können z.B. gemäß "Fawzi, A.; Fawzi, H.; Fawzi, O. Adversarial vulnerability for any classifier. In Proceedings of the NeurIPS 2018, Montreal, QC,Canada, 3-8 December 2018; pp. 1186-1195", https://arxiv.org/pdf/1802.08686.pdf, für die relevanten Perturbationen ("in-distribution") ermittelt werden.

Für die quantitative Bewertung können gemäß der obigen Referenz fundamentale obere Grenzen für die Robustheit eines Klassifikators unter Perturbation der Eingangsdaten bestimmt werden. Für die Quantifizierung der Robustheit wird dann die Differenz der Robustheit bezüglich uneingeschränkter adversarialer Beispiele genutzt.

Gemäß einer weiteren Ausführungsform umfasst das Anpassen der Systemarchitektur ein Anpassen der Komplexität der Systemarchitektur. Das Anpassen der Komplexität kann sowohl ein Ergänzen der Systemarchitektur um eine oder mehrere weitere Detektionskomponenten und/oder Detektionspfade (d.h. ein Upgraden der Systemarchitektur) als auch ein Reduzieren der Systemarchitektur um eine oder mehrere weitere Detektionskomponenten und/oder Detektionspfade (d.h. ein Downgraden der Systemarchitektur) umfassen.

Wird festgestellt, dass die maximal erreichbare Robustheit der Systemarchitektur besser als der vordefinierte Schwellenwert, d.h. unnötig gut, ist, kann die Systemarchitektur reduziert werden, so dass zwar der vordefinierte Schwellenwert erreicht wird, aber die maximal erreichbare Robustheit nicht besser als dieser ist. In diesem Fall können beispielsweise Bauteile durch Entfernen von Detektionspfaden eingespart werden, da die hohe Komplexität der Systemarchitektur für das zu erreichende Ziel nicht erforderlich war und ein reduzierter Aufbau ebenfalls ausreicht.

Im entgegengesetzten Fall kann die Systemarchitektur um weitere Detektionskomponenten oder -pfade ergänzt werden, um beispielsweise eine zusätzliche Redundanz zu dem System hinzuzufügen. Dies erhöht üblicherweise die Robustheit der Systemarchitektur. Insbesondere können hier zusätzliche unabhängige Detektionspfade oder Detektoren hinzugefügt werden, die einen niedrigen oder gut abschätzbaren Common Cause (CC)-Anteil aufweisen.

Gemäß einer weiteren Ausführungsform umfasst das Anpassen der Komplexität ein Verringern der Klassenzahl, ein Verringern der Anzahl der Eingänge in die KI-basierte Detektionskomponente und/oder eine Adaption auf die spezifische Anwendung des Systems.

Hier kann das Verfahren die Detektion durch die KI-basierte Detektionskomponente verbessern, indem die Verarbeitung durch die KI-basierte Detektionskomponente angepasst, insbesondere vereinfacht wird. Beispielsweise können die Eingänge in die KI-basierte Detektionskomponente verringert werden, so dass diese weniger Daten verarbeiten muss und dadurch stabiler in ihrer Vorhersage/Ergebnis wird.

Auch kann die Klassenanzahl der Vorhersage der erkannten Objekte reduziert werden. Beispielsweise kann die KI-basierte Detektionskomponente allgemeinere Vorhersagen treffen: z.B. Objekt oder Person statt welches Objekt und welche Person, kleines Haustier statt Hamster, Katze, Meerschweinchen, etc. Auch eine Anpassung auf den spezifischen Anwendungsfall bzw. eine domänenspezifische Anpassung (Eisenbahn oder Kraftfahrzeug) ist möglich. Bei einem Auto ist eine Kollision mit einem Reh relevant und es sollte gebremst werden, bei einem Zug hingegen nicht. Im Fall eines Zugs könnten Rehe daher den ungefährlichen Objekten zugeschlagen werden, bei denen keine Reaktion erfolgt. Um dies zu erreichen, können beispielsweise die Trainingsdaten der Kl-basierten Detektionskomponente auf die spezifische Domäne angepasst werden. Dies verbessert ebenfalls die Robustheit der Systemarchitektur als Ganzes, da die KI-basierte Detektionskomponente spezifischer trainiert werden kann und daher in ihren Vorhersagen besser wird.

Insgesamt wird durch das hier vorgeschlagene Verfahren eine Möglichkeit bereitgestellt, ein System zur Detektion von Objekten, das zumindest eine KI-basierte Detektionskomponente aufweist, zu bewerten. Basis hierfür ist der Vergleich mit einem Entscheidungskriterium, dem vordefinierten Schwellenwert. Die Bestimmung des entsprechenden Wertes der Systemarchitektur kann z.B. durch eine Fehlerbaumanalyse oder ein Testergebnis erfolgen. Erfüllt die Robustheit der Systemarchitektur den Zielwert, d.h. den vordefinierten Schwellenwert, ist die Systemarchitektur in Ordnung und kann eingesetzt werden. Erfüllt die Robustheit der Systemarchitektur den Zielwert, d.h. den vordefinierten Schwellenwert, nicht, kann die Systemarchitektur entsprechend angepasst werden.

Auf diese Weise ist eine frühe Bewertung eines Systemdesigns, ob die gesteckten Ziele prinzipiell erreichbar sind, möglich. Unnötiger Aufwand und Zeitverlust für weitere Entwicklungsarbeiten können somit vermieden werden. Des Weiteren ist eine frühzeitige Anpassung des Systems und eine erneute Bewertung von Design-Alternativen möglich. Auch kann die Systemarchitektur, d.h. die funktionalen Eigenschaften des Systems, bei gegebenen Robustheitszielen basierend auf der Bewertung durch das Verfahren optimiert werden.

Gemäß einem weiteren Aspekt wird eine Vorrichtung zum Anpassen eines Systems zur Objektdetektion vorgeschlagen, wobei das System eine Systemarchitektur aufweist, die aus Software- und Hardwarekomponenten besteht, wobei zumindest eine Softwarekomponenten eine KI-basierte Detektionskomponente ist. Die Vorrichtung weist eine Bestimmungseinheit, eine Bewertungseinheit und eine Anpassungseinheit auf. Die Bestimmungseinheit ist dazu ausgebildet, die Systemarchitektur zu untersuchen und eine durch die Systemarchitektur maximal erreichbaren Robustheit der Systemarchitektur zu bestimmen. Die Bewertungseinheit ist dazu ausgebildet, zu bewerten, ob die bestimmte Robustheit einen vordefinierten Schwellenwert erfüllt. Die Anpassungseinheit ist schließlich dazu ausgebildet, die Systemarchitektur anzupassen, wenn die bestimmte Robustheit den vordefinierten Schwellenwert nicht erfüllt.

Die jeweilige Einheit, zum Beispiel Bestimmungseinheit oder Anpassungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuereinheit auf einem Server, einem Hostsystem oder ähnlichem ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die für das vorgeschlagene Verfahren beschriebenen Ausführungsformen und Merkmale gelten für die vorgeschlagene Vorrichtung entsprechend.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockdiagramm einer Vorrichtung zum Anpassen eines Systems zur Objektdetektion; und
- Fig. 2: zeigt ein schematisches Ablaufdiagramm eines Verfahrens zum Anpassen eines Systems zur Objektdetektion.

In den Figuren sind gleiche oder funktionsgleiche Elemente mit denselben Bezugszeichen versehen worden, sofern nichts anderes angegeben ist.

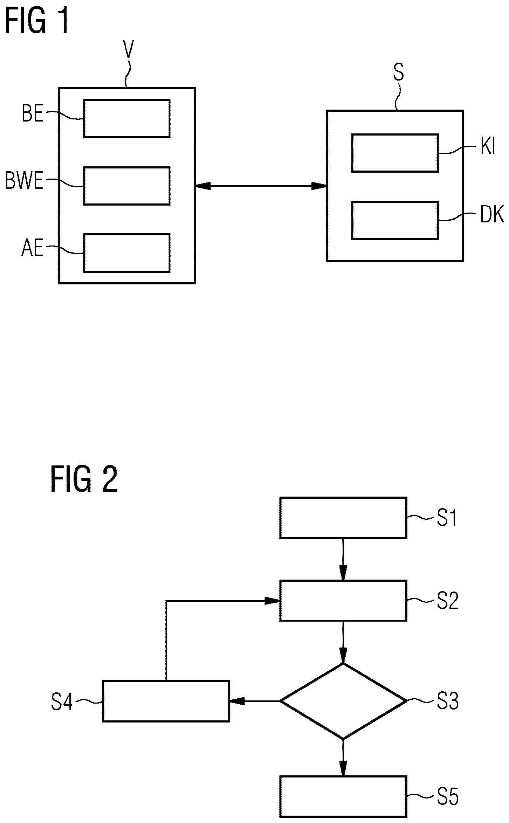

Fig. 1 zeigt ein Verfahren zum Anpassen eines Systems S zur Objektdetektion, wie es in Fig. 2 gezeigt ist.

Das System S weist Software- und Hardwarekomponenten auf, die zusammen eine Systemarchitektur bilden. In Fig. 2 sind beispielhaft zwei Komponenten KI und DK gezeigt. Es sollte jedoch verstanden werden, dass das System S beliebig viele Komponenten aufweisen kann. Zumindest eine der Softwarekomponenten ist eine KI-basierte Detektionskomponente Kl. Das System S dient zur Objektdetektion, beispielsweise im industriellen Bereich oder im mobilen Bereich (z.B. Eisenbahn oder Kraftfahrzeuge). Da gerade bei Einsatz von Kl-Komponenten sichergestellt werden muss, dass diese eine zuverlässige Detektion von Objekten erlauben, muss das System S, bevor es tatsächlich eingesetzt wird, geprüft werden, ob die Vorhersage/Detektion durch die Kl-Komponente zuverlässig genug ist. Hierzu wird eine maximal erreichbare Robustheit der Funktionalität des Systems S, d.h. seiner Systemarchitektur, bestimmt und bewertet.

Hierzu kann eine Vorrichtung V verwendet werden, wie sie in Fig. 2 gezeigt ist, die eine Bestimmungseinheit BE, eine Bewertungseinheit BWE und eine Anpassungseinheit AE aufweist.

In einem ersten optionalen Schritt S1 des Verfahrens von Fig. 1 wird die Systemarchitektur des Systems S festgelegt. Wird das Verfahren an einem bereits bestehenden System S durchgeführt, kann dieser Schritt entfallen. Vorteilhafterweise kann das Verfahren jedoch eingesetzt werden, um bereits in der Planung des Systems S dessen Robustheit und damit Einsatzfähigkeit zu prüfen und eventuell anzupassen.

Anschließend wird die Systemarchitektur untersucht (S2). Dies kann durch die Bestimmungseinheit BE erfolgen. Hierbei wird auch die durch die Systemarchitektur maximal erreichbare Robustheit bestimmt.

In Schritt S3 wird durch die Bewertungseinheit BEW bewertet, ob die bestimmte Robustheit einen vordefinierten Schwellenwert erfüllt.

Ist dies der Fall, kann das System S in Schritt S5 in Betrieb genommen werden.

Wird der vordefinierte Schwellenwert nicht erfüllt, kann die Anpassungseinheit AE in Schritt S4 das System S bzw. dessen Systemarchitektur anpassen. Dies kann ein Downgraden des Systems S sein, wenn die maximal erreichbare Robustheit unnötig gut ist. Dies kann auch ein Upgraden des Systems S sein, um die Systemarchitektur so anzupassen, dass der Schwellenwert erreicht wird.

Nach dem Anpassen der Systemarchitektur in Schritt S4 fängt das Verfahren wieder mit Schritt S2 an. Dies kann so lange wiederholt werden, bis die maximal erreichbare Robustheit den vordefinierten Schwellenwert erfüllt.

Durch das Verfahren und die entsprechende Vorrichtung ist es somit möglich, ein System dahingehend zu untersuchen, ob eine zu erreichende Robustheit auch tatsächlich erreicht wird, und wenn nicht, das System entsprechend anzupassen. Auf diese Weise kann ein solches System mit einer entsprechenden maximal erreichbaren Robustheit auch in sicherheitskritischen Bereichen eingesetzt werden, da vorab sichergestellt werden kann, die Vorhersage von enthaltenen Kl-Detektionskomponenten ausreichend zuverlässig ist oder durch andere Komponenten abgefangen wird, da die Gesamtrobustheit des Systems den vorgegebenen Zielwert erfüllt.

Obwohl die vorliegende Erfindung anhand von Ausführungsbeispielen beschrieben wurde, ist sie vielfältig modifizierbar.

### Bezugszeichenliste

- AE: Anpassungseinheit
- BE: Bestimmungseinheit
- BWE: Bewertungseinheit
- DK: Detektionskomponente
- KI: KI-basierte Detektionskomponente
- S: System
- V: Vorrichtung
- S1-S5: Verfahrensschritte

## Patentansprüche

1. Verfahren zum Anpassen eines Systems (S) zur Objektdetektion, wobei das System (S) eine Systemarchitektur aufweist, die aus Software- und Hardwarekomponenten (DK, KI) besteht, wobei zumindest eine der Softwarekomponenten eine Kl-basierte Detektionskomponente (KI) ist, wobei das Verfahren aufweist:
a) Untersuchen (S2) der Systemarchitektur und Bestimmen der durch die Systemarchitektur maximal erreichbaren Robustheit,
b) Bewerten (S3), ob die bestimmte Robustheit einen vordefinierten Schwellenwert erfüllt, und
c) Anpassen (S4) der Systemarchitektur, wenn die bestimmte Robustheit den vordefinierten Schwellenwert nicht erfüllt.

2. Verfahren nach Anspruch 1, **gekennzeichnet durch** Wiederholen der Schritte a) bis c) bis der vordefinierte Schwellenwert erreicht ist.

3. Verfahren nach einem der vorhergehenden Ansprüche, **dadurch gekennzeichnet, dass** das Verfahren aufweist:
- Detektieren einer Änderung der Systemarchitektur des Systems (S) und
- Wiederholen der Schritte a) bis c) bei einer detektierten Änderung der Systemarchitektur des Systems (S).

4. Verfahren nach einem der vorhergehenden Ansprüche, **dadurch gekennzeichnet, dass** das Verfahren ein Festlegen (S1) der Systemarchitektur vor Schritt a) aufweist.

5. Verfahren nach einem der vorhergehenden Ansprüche, **dadurch gekennzeichnet, dass** das Bestimmen (S2) der maximal erreichbaren Robustheit eine empirische Bewertung der Funktionalität des Systems (S) umfasst.

6. Verfahren nach einem der vorhergehenden Ansprüche, **dadurch gekennzeichnet, dass** das Bestimmen (S2) der Robustheit ein Bestimmen quantitativer Werte der Funktionalität des Systems (S) und Bewerten der bestimmten quantitativen Werten umfasst.

7. Verfahren nach einem der vorhergehenden Ansprüche, **dadurch gekennzeichnet, dass** das Anpassen (S5) der Systemarchitektur ein Anpassen der Komplexität der Systemarchitektur umfasst.

8. Verfahren nach Anspruch 7, **dadurch gekennzeichnet, dass** das Anpassen der Komplexität ein Ergänzen der Systemarchitektur um eine oder mehrere weitere Detektionskomponenten (DK, KI) und/oder Detektionspfade umfasst.

9. Verfahren nach Anspruch 7, **dadurch gekennzeichnet, dass** das Anpassen der Komplexität ein Reduzieren der Systemarchitektur um eine oder mehrere weitere Detektionskomponenten (DK, KI) und/oder Detektionspfade umfasst.

10. Verfahren nach einem der Ansprüche 7 bis 9, **dadurch gekennzeichnet, dass** das Anpassen der Komplexität ein Verringern der Klassenzahl, ein Verringern der Anzahl der Eingänge in die KI-basierte Detektionskomponente (KI) und/oder eine Adaption auf die spezifische Anwendung des Systems (S) umfasst.

11. Vorrichtung (V) zum Anpassen eines Systems (S) zur Objektdetektion, wobei das System (S) eine Systemarchitektur aufweist, die aus Software- und Hardwarekomponenten (DK, KI) besteht, wobei zumindest eine Softwarekomponenten eine KI-basierte Detektionskomponente (KI) ist, wobei die Vorrichtung (V) aufweist:
a) eine Bestimmungseinheit (BE) zum Untersuchen der Systemarchitektur und Bestimmen einer durch die Systemarchitektur maximal erreichbaren Robustheit der Systemarchitektur,
b) eine Bewertungseinheit (BWE) zum Bewerten, ob die bestimmte Robustheit einen vordefinierten Schwellenwert erfüllt, und
c) eine Anpassungseinheit (AE) zum Anpassen der Systemarchitektur, wenn die bestimmte Robustheit den vordefinierten Schwellenwert nicht erfüllt.

12. Computerprogrammprodukt, welches auf einer programmgesteuerten Einrichtung die Durchführung des Verfahrens gemäß einem der Ansprüche 1 bis 10 veranlasst.
